# EUROPÄISCHE PATENTSCHRIFT

(11) **EP 1 514 719 B1**
(45) Veröffentlichungstag und Bekanntmachung des Hinweises auf die Patenterteilung: **02.01.2008**
(21) Anmeldenummer: 04017201.7
(22) Anmeldetag: 21.07.2004
(51) Int. Cl.: B60K 15/04

(54) **Deckel, insbesondere Tankdeckel**
Filler cap for tank
Bouchon de réservoir

(30) Priorität: 04.09.2003 DE 20313900 U
(43) Veröffentlichungstag der Anmeldung: 16.03.2005
(73) Patentinhaber: BLAU Kunststofftechnik Zweigniederlassung der Tesma Europa GmbH, 41516 Grevenbroich (DE)
(72) Erfinder: Scharrer, Konrad, 40721 Hilden (DE)
(74) Vertreter: Albrecht, Ralf

(56) Entgegenhaltungen:
- WO-A-02/22454
- US-A- 4 809 869
- US-A1- 2002 066 734

## Beschreibung

Die Erfindung betrifft einen Deckel, insbesondere Tankdeckel, mit einem Handgriffteil zur Handhabung des Dekkels beim Ein- und Ausdrehen in bzw. aus einem Stutzen sowie mit einem Eingriffteil für den Eingriff des Deckels in dem Stutzen, wobei Handgriffteil und Eingriffteil über eine Rasteinrichtung verbunden sind, die derart ausgebildet ist, daß sie in Eindrehrichtung das Handgriffteil nach Überwindung eines Rastwiderstandes aus einer Raststellung relativ zu dem Eingriffteil mit verringertem Drehwiderstand weiterdrehen läßt, und die einerseits wenigstens eine Rastvertiefung und andererseits wenigstens ein in und aus der bzw. den Rastvertiefung(en) bewegbar geführtes Rastorgan aufweist, wobei das bzw. die Rastorgan(e) in Richtung auf die zugehörige(n) Rastvertiefung(en) mit einer Feder beaufschlagt ist und wobei ein Anschlag zur Begrenzung des Drehwinkels des Handgriffteils nach Überwindung des Rastwiderstandes vorgesehen ist.

Zum Verschließen eines Tankstutzens sind im Stand der Technik Tankdeckel benannt, die ein Handgriffteil zur Handhabung des Tankdeckels beim Ein- und Ausdrehen in bzw. aus dem Tankstutzen sowie ein Eingriffteil aufweisen, das zum Eindrehen des Tankdeckels in den Tankstutzen eingesteckt wird und durch das Eindrehen mit dem Tankstutzen eine formschlüssige Verbindung eingeht. Dies kann in Form eines Gewindeverschlusses oder eines Bajonettverschlusses geschehen.

Beim Verschließen des Tankstutzens mit Hilfe des Tankdekkels ist es wichtig, daß der Tankdeckel die vorgesehene Endstellung erreicht, damit der Tank gegen Kraftstoffverlust abgedichtet ist. Hierzu ist es erforderlich, daß die Bedienungsperson ein Signal erhält, aus dem sie schließen kann, daß die Endstellung tatsächlich erreicht ist.

Im Stand der Technik ist es hierzu bekannt, Handgriffteil und Eingriffteil über eine Rasteinrichtung miteinander zu verbinden, die derart ausgebildet ist, daß sie in Ausdrehrichtung blockiert, in Eindrehrichtung jedoch das Handgriffteil nach Überwindung eines Rastwiderstandes aus der Raststellung relativ zu dem Eingriffteil weiterdrehen läßt. Der Rastwiderstand ist dabei so eingestellt, daß das Eingriffteil beim Eindrehen des Deckels bis zur Endstellung mitgenommen wird, der Eindrehwiderstand also erheblich geringer ist. Bei Erreichen der Endstellung kann das Handgriffteil unter Überwindung des Rastwiderstandes weitergedreht werden. Dabei werden mehrere, eng aneinanderliegende Rastvertiefungen überfahren, so daß ein ratterndes Geräusch entsteht, das dem Benutzer akustisch anzeigen soll, daß die Endstellung erreicht ist. Auch haptisch erfährt der Benutzer durch den schnellen Wechsel von sich erhöhendem und sich erniedrigendem Drehwiderstand eine Information darüber, daß die Endstellung erreicht ist.

Bei dieser Art von Rasteinrichtung entsteht ein hoher Abrieb an den Rastorganen, der die Funktion des in einem solchen Deckel gewöhnlich vorhandenen Über- und Unterdruckventils beeinträchtigen kann. Deshalb sind verschiedene Vorschläge gemacht worden, das Erreichen der Endstellung durch ein einziges optisches oder akustisches Signal anzuzeigen (vgl. DE 203 08 736 U1; DE 203 08 737 U1). Abgesehen davon, daß die Mechanik zur Erzeugung der Signale relativ kompliziert ist, setzt der Gebrauch eines solchen Deckels eine gewisse Aufmerksamkeit voraus.

In der US 2002/0066734 A1 ist ein Deckel gemäß dem Oberbegriff des Anspruchs 1 offenbart, bei dem im Unterschied zu dem vorbeschriebenen Deckel bei Überwindung des Rastwiderstandes nicht mehrere Rastvertiefungen überfahren werden müssen, sondern die Rasteinrichtung nur eine einzige Raststellung aufweist. Dabei ist ein Anschlag zur Begrenzung des Drehwinkels des Handgriffteils nach Überwindung des Rastwiderstandes vorgesehen, der das Handgriffteil am Weiterdrehen hindert. Hierdurch erhält der Benutzer ein haptisch wirkendes Signal darüber, daß er die Endstellung erreicht hat. Konstruktiv ist dies so gelöst, daß das Handgriffteil zwei Rastvertiefungen ausbildet, in die in der Raststellung jeweils ein Rastorgan einfaßt. Die Rastorgane sind an sich in Umfangsrichtung erstreckenden blattfederartigen Stegen angebracht, so daß die Rastorgane bei Überwindung des Rastwiderstandes ausweichen können.

Der Erfindung liegt die Aufgabe zugrunde, einen Deckel der eingangs genannten Art so zu gestalten, daß er konstruktiv einfach ausgebildet ist und dem Benutzer gleichwohl bei Erreichen der Endstellung ein sicheres Gefühl dafür gibt, daß er den Stutzen mit dem Deckel in der vorgesehenen weise verschlossen hat.

Diese Aufgabe wird durch einen Deckel gemäβß Anspruch 1 gelost, in der das bzw. die Rastorgan(e) in einem Führungskanal zumindest im wesentlichen radial verschieblich geführt ist bzw. sind. Hierdurch wird eine Rastverbindung zwischen Handgriffteil und Eingriffteil verwirklicht, die auf mechanisch einfache Weise herstellbar ist und geringem Verschleiß unterliegt.

Der Drehwinkel zwischen Raststellung und Anschlagstellung soll so groß sein, daß die Reduzierung des Drehwiderstandes nach Überwindung des Rastwiderstandes deutlich spürbar wird. Er sollte deshalb zweckmäßigerweise wenigstens 10°, besser wenigstens 15° betragen. Zu große Drehwinkel sollten jedoch vermieden werden, um nicht den Eindruck zu erwecken, der Deckel sei defekt.

In weiterer Ausgestaltung der Erfindung ist vorgesehen, daß die Rastvertiefung(en) zumindest im wesentlichen radial nach innen hin offen ist bzw. sind und daß das bzw. die Rastorgan(e) radial nach außen mit der Feder beaufschlagt ist bzw. sind. Dies läßt eine besonders kompakte Konstruktion zu. Dabei besteht die Möglichkeit, die Rastvertiefung(en) in einem Rastring einzuformen, in den ein Führungsorgan mit dem bzw. den darin geführten Rastorgan(en) einfaßt. Der Anschlag kann dann von dem Rastring nach innen vorstehen.

Nach der Erfindung ist ferner vorgeschlagen, daß ein weiterer Anschlag vorgesehen ist, der die Drehbewegung des Handgriffteils in Ausdrehrichtung relativ zu dem Eingriffteil blockiert. Eine solche Blockade kann zwar auch von einer Kombination aus Rastorgan(en) und Rastvertiefung(en) geleistet werden. Ein zusätzlicher Anschlag entlastet jedoch die Rasteinrichtung und kann robuster ausgebildet werden, so daß eine Beschädigung der Rasteinrichtung beim Ausdrehen des Deckels aus dem Stutzen vermieden wird.

In besonders bevorzugter Ausgestaltung der Erfindung ist vorgeschlagen, daß eine Rückstelleinrichtung zum selbsttätigen Zurückdrehen des Handgriffteils aus einer entrasteten Stellung in die Raststellung vorgesehen ist. Eine solche Rückstelleinrichtung sorgt dafür, daß das Handgriffteil nach Überwindung des Rastwiderstandes in die Raststellung selbsttätig zurückgestellt wird, wenn der Benutzer das Handgriffteil losläßt, insbesondere wenn er das Handgriffteil bis zu dem Anschlag weitergedreht hat. Auf diese Weise wird vermieden, daß sich das Handgriffteil nach Verlassen der Raststellung in einem nicht fixierten Zustand befindet. Zudem wird ein möglicherweise irritierender Leerlauf vermieden, wenn der Deckel wieder aus dem Stutzen herausgedreht werden soll.

Die Rückstelleinrichtung kann zweckmäßigerweise eine Feder aufweisen, die beim Weiterdrehen des Handgriffteils relativ zu dem Eingriffteil, vorzugsweise zunehmend beaufschlagt, d.h. gespannt wird, wobei eine Spannung ausreicht, die das Handgriffteil zuverlässig wieder in die Raststellung zurückführt. Dabei kann es sich um eine von der Rasteinrichtung gesonderte Feder handeln, gegen die das Handgriffteil bei Verlassen der Raststellung anläuft. Besonders vorteilhaft ist es jedoch, hierfür die Feder heranzuziehen, die ohnehin für Beaufschlagung des bzw. der Rastorgan(e) in Richtung auf die Rastvertiefung(en) vorgesehen ist. Dies kann dadurch geschehen, daß das Rastorgan bzw. zumindest eines der Rastorgane nach Verlassen der Rastvertiefung(en) auf eine Rampe aufläuft, die beim Weiterdrehen des Handgriffteils eine solche Bewegung des bzw. der Rastorgan(e) gegen die Wirkung der Feder erzeugt, daß das Handgriffteil unter Einwirkung der Feder selbsttätig in die Raststellung zurückbewegt wird. Durch die Rampe wird also die Feder über das Rastorgan zunehmend gespannt. Wird das Handgriffteil losgelassen, gleitet das Rastorgan aufgrund der Belastung der sich dann wieder zunehmend entspannenden Feder die Rampe in Richtung auf die Raststellung wieder zurück.

In der Zeichnung ist die Erfindung anhand eines Ausführungsbeispiels näher veranschaulicht. Es zeigen:

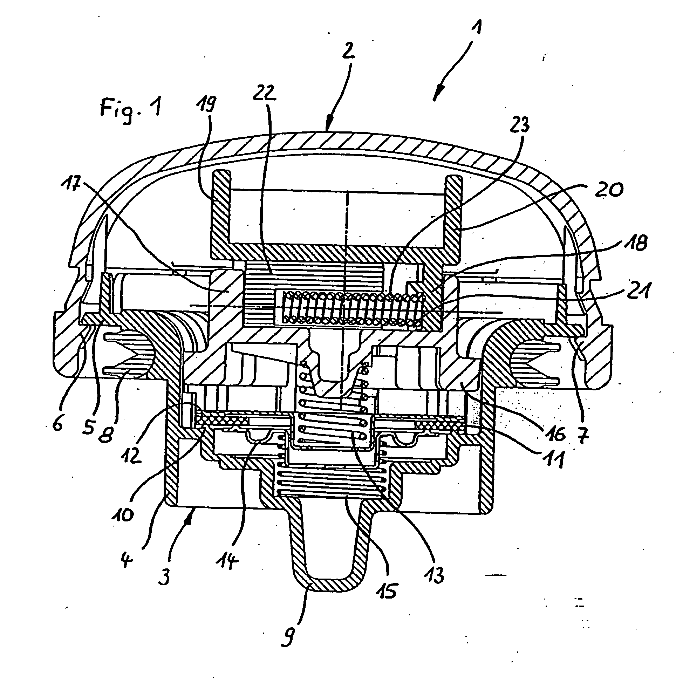

- Figur 1: den erfindungsgemäßen Deckel im Vertikalschnitt;
- Figur 2: den Deckel gemäß Figur 1 mit eingerastetem Handgriffteil im Horizontalschnitt und
- Figur 3: den Deckel in der Darstellung gemäß Figur 2 in entrasteter Stellung des Handgriffteils.

Der in den Figuren dargestellte Tankdeckel 1 hat ein hutförmiges Handgriffteil 2, dessen Außenform so gestaltet ist, daß ein nach oben vorstehender Steg gebildet wird, an dem der Tankdeckel 1 gegriffen werden kann. Das Handgriffteil 2 ist über ein Eingriffteil 3 gestülpt, das einen Eingriffsabschnitt 4 aufweist. Der Eingriffsabschnitt 4 ist auf der Außenseite mit hier nicht näher dargestellten Eingriffselementen, z.B. einem Gewindegang, versehen, über den der Tankdeckel 1 in Eingriff mit einem entsprechenden Gewinde in einem Tankstutzen gebracht werden kann. Der Eingriffsabschnitt 4 geht nach oben in einen horizontal radial nach außen umgebogenen Kragen 5 über, der von dem Handgriffteil 2 mittels Schnappvorsprüngen 6, 7 unterfaßt wird. Ein Dichtungsring 8 umgibt den Übergang zwischen Eingriffsabschnitt 4 und Kragen 5 und dient der Abdichtung zum Stutzen hin.

Innenseitig weist der Eingriffsabschnitt 4 eine Tragschale 9 auf, die einen Ventilsitzring 10 ausbildet. Die Tragschale 9 hat hier nicht näher dargestellte Öffnungen, über die eine Verbindung zum Tank hergestellt wird. Auf dem Ventilsitzring 10 liegt ein scheibenförmiger Ventilring 11 obenseitig auf. Er wird von oben durch eine erste Ventilplatte 12 beaufschlagt, die durch eine auf Druck beanspruchte erste Ventilfeder 13 in Richtung auf den Ventilsitzring 11 gedrückt wird. Von der Unterseite wird der Ventilring 10 von einer zweiten Ventilplatte 14 beaufschlagt, die von einer sich an der Tragschale 9 abstützenden, auf Druck beanspruchten zweiten Ventilfeder 15 in Richtung auf den Ventilring 14 gedrückt wird. Dabei liegt sie so an dem Ventilring 14 an, daß sie die von ihm eingeschlossene Öffnung abdichtend umringt. Die zweite Ventilfeder 15 hat eine geringere Federkraft als die erste Ventilfeder 13.

Bei einem Überdruck von Seiten des Tanks heben Ventilring 10 und die Ventilplatten 12, 14 gegen die Wirkung der ersten Ventilfeder 13 ab. Auf diese Weise kann Gas aus dem mit dem Deckel 1 verschlossenen Tank in die Außenatmosphäre abfließen, wobei in dem Eingriffteil 3 und dem Handgriffteil 2 entsprechende Kanäle und Öffnungen vorhanden sind. Im Falle eines Unterdrucks hebt sich die zweite Ventilplatte 14 von dem Ventilring 11 gegen die Wirkung der zweiten Ventilfeder 15 ab, so daß über die Öffnung im Ventilring 10 und eine mittige Öffnung in der ersten Ventilplatte 12 Luft in den Tank nachströmen kann.

In das Eingriffteil 3 ist innenseitig eine Unterschale 16 drehfest eingeklippt. An dieser Unterschale 16 stützt sich die erste Ventilfeder 13 untenseitig ab. Die Unterschale 16 hat einen von ihr hochstehenden Rastring 17. In den Rastring 17 hinein ragt von oben ein Führungsgehäuse 18 hinein, das obenseitig über hochstehende Kupplungsfahnen 19, 20 drehfest mit dem Handgriffteil 2 verbunden ist.

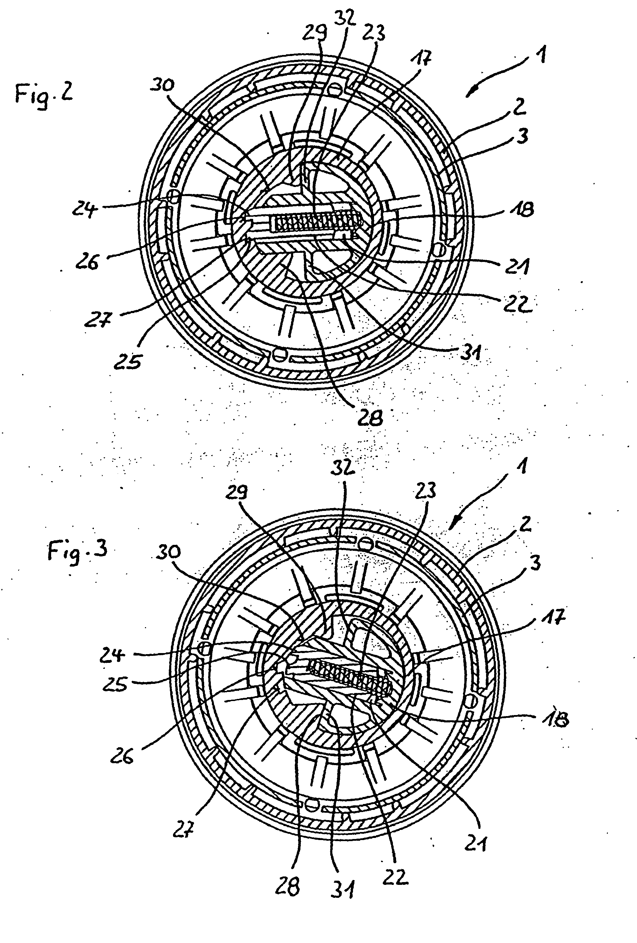

Wie insbesondere aus den Figuren 2 und 3 zu ersehen ist, weist das Führungsgehäuse 18 einen sich radial erstrekkenden Führungskanal 21 auf, in dem ein Rastorgan 22 radial verschieblich geführt ist. Das Rastorgan 22 ist durch eine Druckfeder 23 kraftbeaufschlagt. Die Druckfeder 23 stützt sich einerends am dem Rastorgan 22 und anderenends an dem Führungsgehäuse 18 ab. Das Rastorgan 22 hat an seinem aus dem Führungskanal 21 herausragenden Ende zwei Rastnasen 24, 25, die in Drehrichtung des Führungsgehäuses 18 hintereinander liegen. Die Rastnasen 24, 25 korrespondieren mit komplementär ausgeformten Rastvertiefungen 26, 27, die auf der Innenseite des Rastrings 17 eingeformt sind. Zusätzlich weist der Rastring 17 von der Innenseite radial nach innen vorspringende erste und zweite Anschläge 28, 29 auf, die die Drehbeweglichkeit des Führungsgehäuses 18 gegenüber dem Rastring 17 begrenzen.

In Figur 2 befinden sich Rastorgan 22 und Rastvertiefungen 26, 27 in der Raststellung, d.h. die Rastnasen 24, 25 rasten in die Rastvertiefungen 26, 27 ein. Handgriffteil 2 und Eingriffteil 3 sind dann über die Verrastung von Rastorgan 22 und Rastring 17 soweit drehfest miteinander verbunden, daß der Tankdeckel 1 in einen dafür vorgesehenen Tankstutzen bis zu seiner Endstellung eingedreht werden kann. Der Eindrehwiderstand bis zur Endstellung ist dabei erheblich geringer als der Rastwiderstand zwischen Rastnasen 24 und 25 und Rastvertiefungen 26, 27. Die Eindrehrichtung ist in den Figuren 2 und 3 eine Verdrehung im Uhrzeigersinn.

Erreicht der Tankdeckel 1 seine Endstellung, ist ein Weiterdrehen des Eingriffteils 3 blockiert. Der Benutzer wird jedoch versuchen, das Handgriffteil 3 weiterzudrehen, weil er nicht sicher ist, ob tatsächlich die Endstellung erreicht ist. Dabei überwindet er den Rastwiderstand an den Schrägflächen der Rastnasen 24, 25 und den Rastvertiefungen 26, 27. Das Rastorgan 22 wird gegen die Wirkung der Druckfeder 23 in das Führungsgehäuse 18 eingeschoben, so daß die in Drehrichtung vorn liegende Rastnase 24 auf eine Rampe 30 des Rastrings 17 aufläuft. Diese Rampe 30 hat in Bezug auf die Drehachse des Führungsgehäuses 18 einen immer kleiner werdenden Radius, so daß das Rastorgan 22 bei weiterer Verdrehung des Handgriffteils 2 entsprechend weiter in das Führungsgehäuse 18 eingeschoben und die Druckfeder 23 immer höher verspannt wird. Insgesamt ist jedoch der sich dabei aufbauende Verdrehwiderstand wesentlich geringer als der Rastwiderstand, den es beim Ausfahren der Rastnasen 24, 25 aus den Rastvertiefungen 26, 27 zu überwinden galt. Dies ist für den Benutzer deutlich spürbar.

Die Leerbewegung des Handgriffteils 2 relativ zu dem Eingriffteil ist nur bis zu der in Figur 3 gezeigten Stellung möglich. In dieser Stellung schlägt ein erster Vorsprung 31 des Führungsgehäuses 18 an dem ersten Anschlag 28 an. Die Kombination aus hohem Rastwiderstand, geringem Leerlaufwiderstand und Blockierung durch den ersten Anschlag 28 gibt dem Benutzer ein deutlich spürbares Signal dafür, daß die Entstellung zuverlässig erreicht und ein Weiterdrehen nicht mehr erforderlich ist. Er läßt dann das Handgriffteil 2 los. Die Einwirkung der Druckfeder 23 ist so stark, daß die Rastnase 24 auf der Rampe 23 wieder in Richtung auf die Rastvertiefungen 26, 27 gleitet und damit das Handgriffteil 2 bis in die Raststellung gemäß Figur 2 zurückgestellt wird. Die Rastnasen 24, 25 greifen dann wieder in die Rastvertiefungen 26, 27 ein. Dabei schlägt ein zweiter Vorsprung 32 an dem zweiten Anschlag 29 an. Wird nun das Handgriffteil 2 in Ausdrehrichtung (entgegen dem Uhrzeigersinn) verdreht, wird die Drehbewegung über das Führungsgehäuse 18, den zweiten Vorsprung 32 und den zweiten Anschlag 29 auf den Rastring 17 und damit auf das Eingriffteil 3 und dessen Eingriffsabschnitt 4 übertragen. Die Rastnasen 24, 25 sind auf diese Weise von einer Drehmomentübertragung entlastet.

## Patentansprüche

1. Deckel (1), insbesondere Tankdeckel, mit einem Handgriffteil (2) zur Handhabung des Deckels (1) beim Ein- und Ausdrehen in bzw. aus einem Stutzen sowie mit einem Eingriffteil (3) für den Eingriff des Dekkels (1) in dem Stutzen, wobei Handgriffteil (2) und Eingriffteil (3) über eine Rasteinrichtung (17 sowie 22 bis 27) verbunden sind, die derart ausgebildet ist, daß sie in Eindrehrichtung das Handgriffteil (2) nach Überwindung eines Rastwiderstandes aus einer einzigen Raststellung relativ zu dem Eingriffteil (3) mit verringertem Drehwiderstand weiterdrehen läßt, und die einerseits wenigstens eine Rastvertiefung (26, 27) und andererseits wenigstens ein in und aus der bzw. den Rastvertiefung(en) (26, 27) bewegbar geführtes Rastorgan (22) aufweist, wobei das bzw. die Rastorgan(e) (22) in Richtung auf die zugehörige(n) Rastverbindung(en) (26, 27) mit einer Feder (23) beaufschlagt ist und wobei ein Anschlag (28) zur Begrenzung des Drehwinkels des Handgriffteils (2) nach Überwindung des Rastwiderstandes vorgesehen ist, **dadurch gekennzeichnet, daß** das bzw. die Rastorgan(e) (22) in einem Führungskanal (2) zumindest im wesentlichen radial verschieblich geführt ist bzw. sind.

2. Deckel nach Anspruch 1, **dadurch gekennzeichnet, daß** der Drehwinkel wenigstens 10° beträgt.

3. Deckel nach Anspruch 1 oder 2, **dadurch gekennzeichnet, daß** die Rastvertiefung(en) (26, 27) zumindest im wesentlichen radial nach innen offen ist bzw. sind und daß das bzw. die Rastorgan(e) (22) radial nach außen mit der Feder (23) beaufschlagt ist bzw. sind.

4. Deckel nach Anspruch 3, **dadurch gekennzeichnet, daß** die Rastvertiefung(en) (26, 27) in einem Rastring (17) eingeformt ist bzw. sind, in dem ein Führungsorgan (18) mit dem bzw. den darin geführten Rastorgan(en) (22) einfassen.

5. Deckel nach Anspruch 4, **dadurch gekennzeichnet, daß** der Anschlag (28) nach innen vorsteht.

6. Deckel nach einem der Ansprüche 1 bis 5, **dadurch gekennzeichnet, daß** ein weitere Anschlag (29) vorgesehen ist, der die Drehbewegung des Handgriffteils (2) in Ausdrehrichtung relativ zu dem Eingriffteil (3) blockiert.

7. Deckel nach einem der Ansprüche 1 bis 6, **dadurch gekennzeichnet, daß** eine Rückstelleinrichtung zum selbsttätigen Zurückdrehen des Handgriffteils (2) aus einer entrasteten Stellung in die Raststellung vorgesehen ist.

8. Deckel nach Anspruch 7, **dadurch gekennzeichnet, daß** die Rückkstelleinrichtung eine Feder (23) aufweist, die beim Weiterdrehen des Handgriffteils (2) relativ zu dem Eingriffteil (3) beaufschlagt wird.

9. Deckel nach Anspruch 8, **dadurch gekennzeichnet, daß** das Rastorgan (22) bzw. zumindest eines der Rastorgane nach Verlassen der Rastvertiefung(en) (26, 27) auf eine Rampe (30) aufläuft, die beim Weiterdrehen des Handgriffteils (2) eine solche Bewegung des bzw. der Rastorgan(e) (22) gegen die Wirkung der Feder (23) erzeugt, daß dasHandgriffteil (2) unter Einwirkung der Feder (23) selbsttätig in die Raststellung zurückschwenkt.

## Claims

1. A cap (1), in particular a tank cap, having a handle part (2) for manipulating the cap (1) upon screwing into and out of a neck, and having an engagement part (3) for engagement of the cap (1) in the neck, the handle part (2) and engagement part (3) being connected via a detent device (17, and 22 through 27) that is embodied in such a way that in the screwing-in direction, after a detent resistance is overcome it allows the handle part (2) to continue rotating out of a single detent position relative to the engagement part (3) with decreased rotation resistance, and that comprises on the one hand at least one detent depression (26, 27) and on the other hand at least one detent member (22) guided movably into or out of the detent depression(s) (26, 27), the detent member(s) (22) being impinged upon by a spring (23) toward the associated detent depression(s) (26, 27), and wherein a stop (28) is provided for limiting the rotation angle of the handle part (2) after the detent resistance is overcome, **characterized in that** the detent member(s) (22) is/are guided at least substantially radially slidingly.

2. The cap as defined in Claim 1, **characterized in that** the rotation angle is at least 10 degrees.

3. The cap as defined in Claim 1 or 2, **characterized in that** the detent depression(s) (26, 27) is/are open at least substantially radially inward; and the detent member(s) (22) is/are impinged upon radially outward by the spring (23).

4. The cap as defined in Claim 3, **characterized in that** the detent depression(s) (26, 27) is/are shaped in a detent ring (17) into which fits a guide member (18) having the detent member(s) (22) guided therein.

5. The cap as defined in Claim 4, **characterized in that** the stop (28) projects inwardly.

6. The cap as defined in any of Claim 1 through 5, **characterized in that** a further stop (29) is provided which blocks the rotary motion of the handle part (2) in the unscrewing direction relative to the engagement part (3).

7. The cap as defined in any of Claim 1 through 6, **characterized in that** a return device is provided for automatically rotating the handle part (2) back out of an unlatched position into the detent position.

8. The cap as defined in Claim 7, **characterized in that** the return device comprises a spring (23) that is impinged upon as the handle part (2) continues to rotate relative to the engagement part (3).

9. The cap as defined in Claim 8, **characterized in that** the detent member (22) or at least one of the detent members, after leaving the detent depression(s) (26, 27), runs onto a ramp (30) that, upon further rotation of the handle part (2), generates a motion of the detent member(s) (22) against the action of the spring (23) such that the handle part (2) automatically pivots back into the detent position by the action of the spring (23).

## Revendications

1. Bouchon (1), en particulier bouchon de réservoir, avec une partie de préhension (2) pour manipuler le bouchon (1) lors du vissage et du dévissage dans et/ou hors d'une tubulure et avec une partie d'engagement (3) pour l'engagement du bouchon (1) dans la tubulure, la partie de préhension (2) et la partie d'engagement (3) étant reliées par le biais d'un dispositif d'enclenchement (17 ainsi que 22 à 27), lequel dispositif est réalisé de telle manière qu'il permette de continuer à tourner, avec une résistance à la rotation réduite, dans le sens de vissage, la partie de préhension (2) après le surpassement d'une résistance d'enclenchement à partir d'une seule position d'enclenchement par rapport à la partie d'engagement (3), et à ce qu'il présente d'une part au moins un renfoncement d'enclenchement (26, 27) et d'autre part au moins un organe d'enclenchement (22) guidé de manière à pouvoir se déplacer dans et en dehors du et/ou des renfoncement(s) d'enclenchement, le et/ou les organe(s) d'enclenchement (22) étant sollicité(s) avec un ressort (23) dans le sens de(s) l'assemblage(s) par enclenchement associé(s) (26, 27), une butée (28) destinée à délimiter l'angle de rotation de la partie de préhension (2) après le surpassement de la résistance d'enclenchement étant prévue, et le et/ou les organe(s) d'enclenchement (22) étant guidé(s) dans un canal de guidage (21) de manière à pouvoir être déplacé(s) au moins sensiblement radialement.

2. Bouchon selon la revendication 1, **caractérisé en ce que** l'angle de rotation est d'au moins 10 °.

3. Bouchon selon la revendication 1 ou 2, **caractérisé en ce que** le ou les renfoncement(s) d'enclenchement (26, 27) est ou sont ouvert(s) au moins sensiblement radialement vers l'intérieur, et **en ce que** le ou les organe(s) d'enclenchement (22) est ou sont sollicité(s) radialement vers l'extérieur par le ressort (23).

4. Bouchon selon la revendication 3, **caractérisé en ce que** le ou les renfoncement(s) d'enclenchement (26, 27) est ou sont formé(s) dans une bague d'enclenchement (17), dans laquelle un organe de guidage (18) s'insère avec le ou les organe(s) d'enclenchement (22) guidé(s) à l'intérieur.

5. Bouchon selon la revendication 4, **caractérisé en ce que** la butée (28) fait saillie vers l'intérieur.

6. Bouchon selon l'une quelconque des revendications 1 à 5, **caractérisé en ce qu'**une autre butée (29) est prévue, laquelle bloque le mouvement de rotation de la partie de préhension (2) dans le sens de dévissage par rapport à la partie d'engagement (3).

7. Bouchon selon l'une quelconque des revendications 1 à 6, **caractérisé en ce qu'**un dispositif de rappel est prévu pour un retour automatique de la partie de préhension (2) à partir d'une position désenclenchée dans la position d'enclenchement.

8. Bouchon selon la revendication 7, **caractérisé en ce que** le dispositif de rappel présente un ressort (23), qui est sollicité lors de la poursuite de la rotation de la partie de préhension (2) par rapport à la partie d'engagement (3).

9. Bouchon selon la revendication 8, **caractérisé en ce que** l'organe d'enclenchement (22) et/ou au moins un des organes d'enclenchement monte, après avoir quitté le ou les renfoncements(s) d'enclenchement (26, 27), sur une rampe (30) qui produit, lors de la poursuite de la rotation de la partie de préhension (2), un mouvement du ou des organe(s) d'enclenchement à l'encontre de l'action du ressort (23) tel que la partie de préhension (2) bascule à nouveau automatiquement, sous l'effet du ressort (23), dans la position d'enclenchement.
